# EUROPÄISCHE PATENTANMELDUNG

(11) **EP 1 391 711 A2**
(43) Veröffentlichungstag der Anmeldung: **25.02.2004**
(21) Anmeldenummer: 03003917.6
(22) Anmeldetag: 21.02.2003
(51) Int. Cl.: G01M 1/04

(54) **Verfahren und Vorrichtung zum zentrierten Spannen eines Kraftfahrzeugrades auf eine Hauptwelle einer Radauswuchtmaschine**

(30) Priorität: 21.08.2002 DE 10238271
(71) Anmelder: Snap-on Equipment GmbH, 64319 Pfungstadt (DE)
(72) Erfinder: Rothamel, Karl, 64372 Ober-Ramstadt (DE)
(74) Vertreter: Nöth, Heinz

(57) **Zusammenfassung**

Ein Verfahren und eine Vorrichtung zum zentrierten Spannen eines Kraftfahrzeugrades 19 auf eine Hauptwelle 1 einer Radauswuchtmaschine, wobei das Rad auf einen an der Hauptwelle 1 gelagerten Zentrierkonus 20 gespannt wird und bei einem Nachzentriervorgang das Rad 19 zumindest teilweise entspannt wird, wobei das Rad gegenüber der Ausgangsdrehwinkelposition um etwa 180° gedreht ist und anschließend das Rad erneut gespannt wird.

## Beschreibung

### [Beschreibung]

Die Erfindung betrifft ein Verfahren zum zentrierten Spannen eines Kraftfahrzeugrades auf eine Hauptwelle einer Radauswuchtmaschine nach dem Oberbegriff des Patentanspruches 1 sowie eine Vorrichtung nach dem Oberbegriff des Patentanspruches 10.

### [Stand der Technik]

Ein derartiges Verfahren und eine derartige Vorrichtung sind aus der US 5,615,574 (= EP 0 550 816 B1, DE 42 00 380 C2) bekannt. Beim bekannten Verfahren und bei der bekannten Vorrichtung wird das Rad auf einen an der Hauptwelle gelagerten Zentrierkonus mit axial gerichteter Spannkraft gespannt. Dabei wirkt eine zur Spannkraft axial entgegengesetzt gerichtete Vorspannung zwischen dem Rad und dem Zentrierkonus. Diese Vorspannung wird vorzugsweise von einer Feder erzeugt. Das Spannen und Entspannen des Rades erfolgt durch axiale Bewegungen einer Zugstange, welche durch eine axiale Bohrung der Hauptwelle geführt ist. Die axiale Bewegung der Zugstange, welche beim Spannen und Entspannen des Rades ausgenützt wird, wird von einem elektromotorischen Drehantrieb, dessen Drehbewegung in eine Linearbewegung umgewandelt wird, erzeugt.

Zur Erzielung einer ausreichenden Zentrierung des Kraftfahrzeugrades auf der Hauptwelle ist es erforderlich, das Kraftfahrzeugrad anzuheben und über die konische Spannfläche des Zentrierkonus hochzuschieben. Die hierfür erforderliche Kraft muss von der Bedienungsperson oder von einem zusätzlichen mechanischen Radpositionierer, welcher mit einem Hubantrieb ausgestattet ist, geleistet werden. Es besteht dabei jedoch die Gefahr, dass das Rad mit seiner Mittenbohrung nicht exakt auf den Zentrierkonus vor dem Spannen aufgesetzt wird. Hierdurch können Zentrierfehler entstehen, welche zu Verfälschungen der Unwuchtmesswerte führen. Zentrierfehler von 1/10 mm verursachen bereits erhebliche Abweichungen von den tatsächlichen Unwuchtwerten.

### [Aufgabe der Erfindung]

Aufgabe der Erfindung ist es daher, eine präzise Zentrierung des auszuwuchtenden Kraftfahrzeugsrades auf der Hauptwelle der Radauswuchtmaschine zu erreichen.

Diese Aufgabe wird erfindungsgemäß beim Verfahren durch die kennzeichnenden Merkmale des Patentanspruches 1 und bei der Vorrichtung durch die kennzeichnenden Merkmale des Patentanspruches 10 gelöst. Die Unteransprüche beinhalten vorteilhafte Weiterbildungen der Erfindung.

Bei der Erfindung wird das zunächst gespannte Rad bei einem Nachzentriervorgang zumindest teilweise entspannt, wobei vorzugsweise vor oder während des Entspannens das Rad langsam um wenigstens etwa 180° gedreht wird. Die Drehung kann auch nach dem Entspannen erfolgen.

Aufgrund der Vorspannung, welche zwischen dem Rad und dem Zentrierkonus herrscht und welche axial entgegengesetzt gerichtet zur Spannkraft beim Spannen des Rades ist, erfolgt eine Selbstzentrierung des Rades am Zentrierkonus. Falls das Rad beim ersten Spannen, beispielsweise aufgrund seiner Schwerkraft nicht allseitig auf dem Zentrierkonus aufsitzt, wird sich das Rad nach einer Drehung von ca. 180° unterstützt durch die Vorspannung am Konus selbst zentrieren, da die Schwerpunktlage aus einer unterhalb der Konusachse liegenden Position in eine über der Konusachse liegenden Position gebracht wurde. Die Vorspannkraft, welche in herkömmlicher Weise durch eine Feder, insbesondere Druckfeder erzeugt wird, ist so hoch, dass das Rad in der selbstzentrierten Position am Zentrierkonus gehalten wird und anschließend das Rad erneut gespannt wird. Das Rad befindet sich dann in einer exakt zentrierten Position. Die geometrische Radachse und die Drehachse der Hauptwelle stimmen überein.

Der Nachzentriervorgang erfolgt vorzugsweise bei Beginn eines Unwuchtmesslaufs, wobei das Rad mit einer wesentlich geringeren Drehzahl als beim Unwuchtmesslauf von Hand oder vom Elektromotor gedreht wird. Der Vorgang des Nachzentrierens kann automatisch erfolgen oder durch Programmwahl aktiviert werden. Die Bewegung, durch welche das Rad beim Nachzentrieren entspannt wird, kann abgetastet werden. Dabei kann der Grad des zumindest teilweise Entspannens des Rades in Abhängigkeit von der Kraft der Vorspannung gesteuert oder eingestellt werden. Vorzugsweise wird der beim Entspannen im Elektromotor fließende Strom gemessen, wobei aus dem Stromabfall der entspannte Zustand erfasst wird. Vorzugsweise wird das Rad beim Entspannen in einer Drehwinkelposition angehalten, welche einer Drehung von etwa 180° entspricht. Es ist nicht erforderlich, dass das Rad exakt in einer Drehwinkelposition von 180° angehalten wird. Abweichungen hiervon in der Größenordnung von etwa 15° bis 20° in beide Drehrichtungen können bereits die gewünschte Selbstzentrierung des Rades auf dem Zentrierkonus, bei welcher das Rad aufgrund seiner Schwerkraft bei der zumindest teilweisen Entspannen in die exakt zentrierte Position sich absenkt. Anschließend wird das Rad wieder auf den Zentrierkonus gespannt. Der Vorgang des Nachzentrierens kann auch mehrfach wiederholt werden. Vorzugsweise erfolgt die Steuerung der Schritte des Nachzentriervorgangs durch eine elektronische Steuereinrichtung, die entsprechend programmiert ist und in der Maschinenelektronik vorgesehen bzw. integriert sein kann.

### [Beispiele]

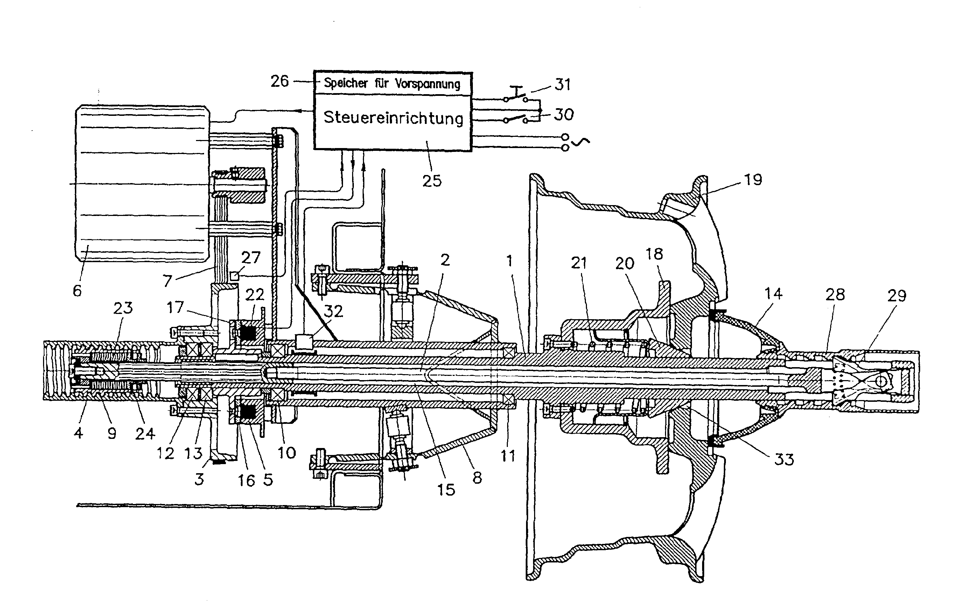

Anhand der Figur wird an einem Ausführungsbeispiel die Erfindung noch näher erläutert.

Die Figur zeigt in schnittbildlicher Darstellung eine Vorrichtung zum zentrierten Spannen eines Kraftfahrzeugrades, welche einen Grundaufbau aufweist, wie er aus der US 5,615,574 bekannt ist.

Das dargestellte Ausführungsbeispiel zeigt Teile einer Radauswuchtmaschine, welche zur Erläuterung der Erfindung dienen. Durch eine axiale Bohrung 15 einer Hauptwelle 1 der Radauswuchtmaschine erstreckt sich eine Zugstange 2, welche axial in beiden Richtungen beweglich gelagert ist. Die Zugstange ist vorzugsweise gegen Verdrehung gegenüber der Hauptwelle 1 gesichert. An dem über die Hauptwelle 1 hinausragendem Ende (rechtes Ende in der Figur) befinden sich Spannmittel, mit denen in Zusammenwirkung der Axialverschiebung der Zugstange 2 ein Kraftfahrzeugrad 19, von welchem in der Figur, das Scheibenrad dargestellt ist, auf die Hauptwelle 1 aufgespannt werden kann.

Die Spannmittel beinhalten einen Zentrierkonus 20, welcher auf der Hauptwelle 1 in axialer Richtung verschiebbar gelagert ist. Der Zentrierkonus 20 ist über eine Druckfeder 21 oder eine andere geeignete Einrichtung zur Erzeugung einer Vorspannkraft an der Hauptwelle 1 abgestützt.

Beim Spannen wird, wie im einzelnen noch erläutert wird, die Zugstange 2 in der Figur nach links bewegt, wodurch das Kraftfahrzeugrad 19 mit einem Mittenloch 33 auf den Zentrierkonus 20 gedrückt wird. Dieser Kraft wirkt die von der Feder 21 erzeugte Vorspannung entgegen. Das festgespannte Kraftfahrzeugrad 19 ist dabei gegen einen an der Hauptwelle 1 befestigten Flansch 18 gedrückt.

Bei der in der Figur dargestellten Spannvorrichtung wird eine Spannvorrichtung verwendet, bei welcher der Zentrierkonus 20 in axialer Richtung verschiebbar an der Hauptwelle 1 gelagert ist, wobei die Vorspannung von der Druckfeder 21 erzeugt wird. Die Druckfeder 21 ist als zylindrische Schraubenfeder ausgebildet. Eine derartige Spanneinrichtung ist beispielsweise aus der DE 195 11 405 A1 bekannt. Bei der Spannvorrichtung gemäß dem Ausführungsbeispiel wird das Kraftfahrzeugrad 19 ferner mittels eines an einer Spannhülse 28 befestigten Drucktopfes 14 auf den an der Hauptwelle 1 gelagerten Zentrierkonus 20 aufgespannt. Hierzu kann die bekannte Spannhülse 28, welche den Drucktopf 14 aufweist, beispielsweise durch Schraubenverbindung fest mit rechten überstehenden axialen Ende der Zugstange 2 verbunden werden. Beim dargestellten Ausführungsbeispiel ist die Zugstange an ihrem rechten Ende über scherenförmige Klauen 29 mit der Spannhülse 28 verbunden. Die scherenförmigen Klauen 29 können in verschiedene an der Innenwand der Spannhülse vorgesehen Ausnehmungen eingreifen. Beim dargestellten Ausführungsbeispiel sind vier umlaufende Ausnehmungen (Eingriffsnuten) für die Klauen 29 vorgesehen. Die scherenförmigen Klauen 29 werden durch eine Feder radial nach außen in die jeweilige umlaufende Eingriffsnut der Spannhülse 28 gedrückt.

Die Spannvorrichtung kann jedoch auch so ausgebildet sein, wie es aus der US 5,615,574 (= EP 0 550 816 B1, DE 42 00 380 C2) bekannt ist. Bei dieser bekannten Spannvorrichtung wird der Zentrierkonus über eine scherenförmige Stützvorrichtung an der Spannhülse abgestützt. Die scherenförmige Abstützung steht unter der Vorspannung einer Zugfeder, welche die scherenförmige Abstützung im Sinne eines Schließens vorspannt. Die beiden freien Enden der scherenförmigen Abstützung sind hierbei in radialer Richtung verschiebbar, gegebenenfalls gegen einen Endanschlag an der Rückseite des Zentrierkonus abgestützt. Die Vorspannkraft wird dabei von der Zugfeder, welche die scherenförmige Abstützung im Sinne eines Schließens vorspannt, geliefert.

Am anderen Ende (linken Ende in der Figur) besitzt die Zugstange 2 ein Gewinde 9. Das Gewinde 9 ist an einem zylindrischen Gewindeteil 24 vorgesehen, das über eine gegebenenfalls federnd ausgebildete Stützscheibe 23 mit dem linken Zugstangenende verbunden ist. Mit dem Gewinde 9, welches auf dem zylindrischen Gewindeteil 24 ein Außengewinde bildet, steht ein Innengewinde einer Spannmutter 4 in Eingriff. Die Spannmutter 4 ist an einer Riemenscheibe 3 befestigt, welche in Lagern 12 und 13 auf der Hauptwelle 1 drehbar gelagert ist. Über einen Riementrieb 7 kann die Riemenscheibe 3 durch einen Elektromotor angetrieben werden.

Für das Abbremsen der Hauptwelle 1, welche am Rahmen oder an Schwingern 8 der Radwuchtmaschine in Lagern 10 und 11 drehbar gelagert ist, dient eine Bremse 5, welche vorzugsweise als Elektromagnetbremse ausgebildet ist. Diese besitzt in einem Stator einen Elektromagneten 22 und einen Anker 16 vorzugsweise in Form einer Ankerscheibe. Die Ankerscheibe 16 ist über eine Flanschnabe 17 mit der Hauptwelle 1 verbunden. Durch die Bremse 5 kann die Hauptwelle 1 still gesetzt werden.

Beim Spannen des Kraftfahrzeugrades 19 an der Hauptwelle 1 wird durch den gespeisten Elektromagneten 22 der Anker 16 an den Stator der Bremse 5 angezogen, so dass die Hauptwelle gegen Drehung blockiert ist. Durch den eingeschalteten Elektromotor 6 wird die Riemenscheibe 3 und die Spannmutter 4 so gedreht, so dass die Zugstange 2 in der Figur nach links axial bewegt wird. Dadurch wird das Kraftfahrzeugrad 19 mittels der Spannmittel an der Hauptwelle 1 festgespannt.

Beim Entspannen wird bei aktivierter Bremse 5, d.h. bei angehaltener Hauptwelle 1 die Drehrichtung des Elektromotors 6 und damit der Spannmutter 4 umgekehrt, so dass die Zugstange 2 in der Figur nach rechts bewegt wird. Dadurch wird die Spannkraft, mit welcher das Kraftfahrzeugrad 19 auf den an der Hauptwelle 1 befestigten Anlageflansch 18 gespannt wird, aufgehoben.

Das Spannen und Entspannen kann auch in der Weise erfolgen, wie es in der US 5,615,574 (= EP 0 550 816 B1, DE 42 00 380 C2) beschrieben ist.

Um die Gefahr von Zentrierfehlern, insbesondere Abweichungen der geometrischen Radachse von der Drehachse der Hauptwelle 1 zu vermeiden, wird bei Beginn des Unwuchtmessvorganges ein Nachzentriervorgang durchgeführt, mit welchem eine exakte Zentrierung des Kraftfahrzeugrades 19 auf dem Zentrierkonus erreicht wird. Dieser Nachzentriervorgang wird unter Zuhilfenahme einer elektronischen Steuereinrichtung 25 erreicht, welche in der Maschinenelektronik in Form eines Programms oder zusätzlicher elektronischer Bauteile vorgesehen sein kann. Die elektronische Steuereinrichtung 25 kann automatisch beim Einschalten des Unwuchtvorgangs aktiviert werden. Dies kann vorzugsweise dadurch geschehen, dass beim Einschalten des Elektromotors 6 für die Durchführung des Unwuchtmesslaufs die elektronische Steuereinrichtung 25 für den Nachzentriervorgang miteingeschaltet wird. Bei herkömmlichen Radauswuchtmaschinen geschieht dies beispielsweise durch Schließen der Radschutzhaube. Hierbei wird ein Ein-/Ausschalter 30 betätigt. Es ist jedoch auch möglich, beispielsweise durch einen Tastenschalter 31 die elektronische Steuereinrichtung 25 zur Durchführung des Nachzentriervorgangs mittels eines separaten Schalters 31, beispielsweise Tastendruckschalters zu aktivieren.

Bei der Durchführung des Nachzentriervorgangs wird beim Einschalten beispielsweise beim Schließen der Radschutzhaube die Bremse 5 durch die Steuereinrichtung 25 so betätigt, dass der Anker 6 drehfest mit der Riemenscheibe 3 verbunden ist. Hierdurch ist die Hauptwelle an den Elektromotor 6 angekuppelt. Der Anker 16 der Bremse 5 besitzt somit eine Doppelfunktion und wirkt in der in der Figur dargestellten Position, bei welcher er drehfest mit der Riemenscheibe 3 verbunden ist, als Kupplung zur drehfesten Verbindung der Hauptwelle 1 mit dem Elektromotor 6 und beim Anziehen an den Stator als Bremse zum Anhalten der Hauptwelle 1.

Zur Einleitung des Nachzentriervorgangs wird der Elektromotor mit niedriger Drehzahl, welche wesentlich geringer ist als die Drehzahl beim Unwuchtmesslauf angetrieben. Bei dieser langsamen Drehbewegung wird das auf die Hauptwelle 1 gespannte Kraftfahrzeugrad 19 gegenüber seiner Ausgangsdrehwinkellage in eine um etwa 180° (± etwa 20°) veränderte Drehwinkelposition gebracht. Hierbei kann das Kraftfahrzeugrad 19 etwa die halbe Umdrehung ausführen oder mehrere Umdrehungen ausführen und wird in der gewünschten Drehwinkelposition mit etwa 180° gegenüber der Ausgangsposition angehalten. Zum Anhalten wird der Elektromagnet 22 der Bremse 5 gespeist, so dass der Anker 16 angezogen wird und die Hauptwelle 1 und das darauf befindliche Kraftfahrzeugrad 19 angehalten werden. Falls die Drehrichtung des Elektromotors 6 der Drehrichtung entspricht, mit welcher die Zugstange 2 in der Figur nach rechts (Entspannungsrichtung) bewegt wird, angetrieben wird, kann der Motorantrieb beibehalten werden, so dass ein zumindest teilweises Entspannen des Kraftfahrzeugrades 19 erreicht wird. Falls die Drehantriebsrichtung des Elektromotors 6 mit der gewünschten Entspannungsrichtung nicht übereinstimmt, wird die Drehbewegung des Elektromotors 6 umgekehrt. Das Kraftfahrzeugrad 19 kann auch von Hand in die um etwa 180° geänderte Drehwinkelposition gebracht werden.

Zum Entspannen des Kraftfahrzeugrades 19 wird durch Drehung der Riemenscheibe 3 und der Spannmutter 4 die Zugstange 2 so weit in der Figur nach rechts verschoben, bis das Kraftfahrzeugrad 19 von dem Anlageflansch 18 gelöst wird. Vorzugsweise wird dabei die Drehbewegung der Riemenscheibe 3 mittels einer Abtasteinrichtung 27 abgetastet. Auf der Riemenscheibe 3 können hierzu Markierungen vorgesehen sein, welche Inkrementwinkelschritte für die Abtasteinrichtung 27 darstellen. Die entsprechenden Messsignale der Abtasteinrichtung (Inkrementalgeber 27) werden an die Steuereinrichtung 25 geliefert, welche bei ausreichender Entspannung des Kraftfahrzeugrades die Drehung des Elektromotors 6 stillsetzt. Hierdurch erreicht man eine Abtastung der Axialbewegung der Zugstange 2 beim Entspannen des Kraftfahrzeugrades 19 während des Nachzentriervorgangs. Ferner kann der entspannte Zustand durch Erfassen eines Abfalls des durch den Elektromotor 6 fließenden Stromes, der während des Entspannes gemessen wird, ermittelt werden. Beim Entspannen entsteht ein nur geringer Spalt zwischen dem Anlageflansch 18 und dem Kraftfahrzeugrad 19. Der Spalt ist so bemessen, dass die Selbstzentrierung des Rades auf dem Zentrierkonus aufgrund der Schwerkraft stattfinden kann. Wenn das Kraftfahrzeugrad 19 nicht exakt zentriert auf dem Zentrierkonus 20 aufsitzt, befindet sich aufgrund der etwa 180°-Drehung des Kraftfahrzeugrades 19 gegenüber der Ausgangsdrehwinkelposition der Schwerpunkt über der Konusachse, welche mit der Drehachse der Hauptwelle 1 zusammenfällt, so dass aufgrund der Vorspannung der Feder 21 der Zentrierkonus 20 in die Mittenbohrung 33 des Scheibenrades 19 geschoben wird.

Der Elektromotor 6 wird anschließend durch die Steuereinrichtung 25 wieder eingeschaltet und bei durch die Bremse 5 festgehaltener Hauptwelle 1 die Zugstange 2 zum Spannen des Kraftfahrzeugrades 19 nach links in der Figur verschoben.

Die jeweilige Drehwinkelposition der Hauptwelle 1 und damit des Kraftfahrzeugrades 19 kann mit Hilfe der Abtasteinrichtung 27 festgestellt werden. Vorzugsweise erfolgt jedoch eine separate Abtastung der jeweiligen Drehwinkelposition mit Hilfe eines Drehwinkelgebers 32, welcher an der Hauptwelle 1 befestigte Drehwinkelinkrementmarkierungen abtastet.

Beim dargestellten Ausführungsbeispiel kann der Grad der Entspannung des Kraftfahrzeugrades beim Nachzentrieren in Abhängigkeit von der Kraft der Vorspannung, welche von der Feder 21 geliefert wird, eingestellt werden. Hierzu kann mit der Steuereinrichtung 25 ein entsprechender Speicher 26 vorgesehen sein, in welchem der Wert der jeweils von der Feder 21 gelieferten Vorspannung gespeichert ist. Bei unterschiedlichen Spannmitteln können die entsprechenden Werte der Vorspannung in diesen Speicher eingegeben werden.

Nach Beendigung des Nachzentrierens wird die Bremse 5 durch Stromlosschalten des Elektromagneten 22 gelöst. Das vom Elektromotor 6 gelieferte Drehmoment wird dann über die Riemenscheibe 3 auf die Hauptwelle 1 zum Hochlauf auf die Messdrehzahl übertragen.

### [Bezugszeichenliste]

- 1: Hauptwelle
- 2: Zugstange
- 3: Riemenscheibe
- 4: Spannmutter
- 5: Elektromagnetbremse
- 6: Elektromotor
- 7: Riementrieb
- 8: Schwinger
- 9: Zugstangengewinde
- 10-13: Lager
- 14: Drucktopf
- 15: axiale Bohrung
- 16: Anker
- 17: Flanschnabe
- 18: Anlageflansch
- 19: Kraftfahrzeugrad
- 20: Zentrierkonus
- 21: Feder
- 22: Elektromagnet
- 23: Stützscheibe
- 24: zylindrisches Gewindeteil
- 25: elektronische Steuereinrichtung
- 26: Vorspannungsspeicher
- 27: Abtasteinrichtung
- 28: Spannhülse
- 29: scherenförmige Abstützung
- 30: Ein-/Ausschalter
- 31: separater Schalter
- 32: Drehwinkelgeber
- 33: Mittenloch

## Patentansprüche

1. Verfahren zum zentrierten Spannen eines Kraftfahrzeugrades auf eine Hauptwelle einer Auswuchtmaschine, bei dem das Rad auf einen an der Hauptwelle gelagerten Zentrierkonus mit axial gerichteter Spannkraft gespannt wird, wobei eine zur Spannkraft axial entgegengesetzt gerichtete Vorspannung zwischen dem Rad und dem Zentrierkonus wirkt,
**dadurch gekennzeichnet, dass** bei einem Nachzentriervorgang das Rad nach einer Drehung um einen Drehwinkel von wenigstens etwa 180° zumindest teilweise entspannt wird und dann das Rad erneut gespannt wird.

2. Verfahren nach Anspruch 1,
**dadurch gekennzeichnet, dass** das Rad beim Nachzentrieren mit wesentlich geringerer Drehzahl als beim Unwuchtmesslauf gedreht wird.

3. Verfahren nach Anspruch 1 oder 2,
**dadurch gekennzeichnet, dass** die Schritte des Nachzentrierens bei Beginn des Unwuchtmessvorgangs automatisch oder durch Programmwahl aktiviert werden.

4. Verfahren nach einem der Ansprüche 1 bis 3,
**dadurch gekennzeichnet, dass** die Bewegung der Spannmittel, durch welche das Rad beim Nachzentrieren entspannt wird, abgetastet wird.

5. Verfahren nach einem der Ansprüche 1 bis 4,
**dadurch gekennzeichnet, dass** beim Entspannen das Rad in einer Drehwinkelposition, welche ausgehend von der Anfangsdrehwinkelposition einer Drehung von etwa 180° entspricht, angehalten wird.

6. Verfahren nach einem der Ansprüche 1 bis 5,
**dadurch gekennzeichnet, dass** die Schritte des Nachzentriervorgangs wiederholt durchgeführt werden.

7. Verfahren nach einem der Ansprüche 1 bis 6,
**dadurch gekennzeichnet, dass** die Schritte des Nachzentriervorgangs elektronisch gesteuert werden.

8. Verfahren nach einem der Ansprüche 1 bis 7,
**dadurch gekennzeichnet, dass** der Grad des zumindest teilweise Entspannens des Rades in Abhängigkeit von der Kraft der Vorspannung gesteuert wird.

9. Verfahren nach einem der Ansprüche 1 bis 8,
**dadurch gekennzeichnet, dass** beim Entspannen der im Elektromotor fließende Strom gemessen wird.

10. Vorrichtung zum zentrierten Spannen eines Kraftfahrzeugrades auf eine Hauptwelle einer Radauswuchtmaschine mit einem koaxial zur Hauptwelle angeordneten Zentrierkonus und axial zur Hauptwelle durch einen Elektromotor angetriebenen Spannmitteln, mit denen das Kraftfahrzeugrad spann- und entspannbar ist,
**dadurch gekennzeichnet, dass** zur Bewegungssteuerung der Spannmittel (2-6) eine zusätzliche Steuereinrichtung (25) und eine mit der Steuereinrichtung (25) verbundene Abtasteinrichtung (27), welche die Bewegung der Spannmittel (2-6) abtastet, vorgesehen sind, wobei die Steuereinrichtung (25) so programmiert oder programmierbar ist, dass beim Start des Unwuchtmessvorgangs die Spannmittel (2-6) bei um etwa 180° gedrehtem Kraftfahrzeugrad (19) in eine Entspannungsstellung gesteuert sind.
